# FASCICULE DE BREVET EUROPEEN

(11) **EP 1 961 922 B1**
(45) Date de publication et mention de la délivrance du brevet: **11.01.2012**
(21) Numéro de dépôt: 08075112.6
(22) Date de dépôt: 13.02.2008
(51) Int. Cl.: F01D 17/16, F02K 3/06

(54) **Commande des aubes à angle de calage variable**
Steuerung von Laufschaufeln mit variablem Einstellwinkel
Control of variable pitch angle blades

(30) Priorité: 22.02.2007 FR 0701258
(43) Date de publication de la demande: 27.08.2008
(73) Titulaire: SNECMA, 75015 Paris (FR)
(72) Inventeur: Foucher, Christelle, 77240 Cesson (FR)
(74) Mandataire: Bloch & Bonnétat

(56) Documents cités:
- FR-A- 1 325 261
- GB-A- 825 547
- US-A- 3 471 126

## Description

La présente invention concerne la commande des aubes à angle de calage variable, notamment un dispositif de commande d'un pivot d'aube à angle de calage variable dans un compresseur de turbomachine.

Une turbomachine aéronautique comporte classiquement un compresseur, une chambre de combustion et une turbine. Le rôle de la turbine est d'assurer l'entraînement en rotation du compresseur en prélevant une partie de l'énergie de pression des gaz chauds sortant de la chambre de combustion et en la transformant en énergie mécanique.

Un compresseur axial est constitué d'une partie tournante, le rotor, d'une partie fixe, le stator, et d'une enveloppe, le carter, le stator et le carter étant solidaires l'un de l'autre. Le rotor comprend un tambour constitué par un assemblage de plusieurs disques sur lesquels sont fixées des aubes mobiles en rangée circonférentielle. Le stator est constitué d'une pluralité d'aubes fixées sur le carter ou sur des viroles en rangée circonférentielle. Chaque rangée d'aubes fixes du stator, dites redresseuses, constitue un redresseur. Une rangée d'aubes mobiles et une rangée d'aubes fixes forment un étage de compresseur.

Dans un compresseur, pour optimiser le rendement de la turbomachine et la marge au pompage selon le régime, une ou plusieurs rangées d'aubes redresseuses peuvent être à angle de calage variable, c'est-à-dire que l'angle d'attaque de ces aubes varie en fonction des conditions de vol.

Les dispositifs connus pour la commande des pivots d'aube à angle de calage variable comportent souvent un anneau de commande entourant un carter de la turbomachine et une pluralité de leviers ou biellettes. Chaque levier comporte, d'une part, une première extrémité montée rigidement sur un pivot solidaire d'une aube dont l'axe de rotation est orienté radialement par rapport à l'axe de révolution de la turbomachine et, d'autre part, une deuxième extrémité reliée à l'anneau de commande. La modification synchronisée de la position angulaire des aubes est obtenue par la rotation de l'anneau de commande autour de l'axe de la turbomachine. Un tel système est illustré sur la figure 1 du document US 5024580.

Le pivot d'une aube est disposé dans un alésage habituellement réalisé dans le carter et orienté radialement par rapport à l'axe de la turbomachine. Les mouvements de l'anneau de commande, du levier et du pivot pour la variation de l'angle de calage exposent les zones de contact de ces pièces à des dégradations, lesquelles sont accentuées par les vibrations de la turbomachine. Les usures les plus importantes sont constatées entre le pivot et l'alésage en raison des pressions de matage ce qui est préjudiciable à la tenue mécanique des pièces et donc à leur durée de vie. De plus, une perte de précision partielle ou totale dans l'angle calage des aubes nuit au bon fonctionnement de la turbomachine et notamment à son rendement.

Pour réduire l'usure entre le pivot et l'alésage, il est connu d'interposer entre ces pièces une ou plusieurs douilles cylindriques jouant le rôle de palier et de lubrifiant sec. Des exemples de douilles cylindriques sont illustrées sur les différentes figures du document EP 1500791. Les matériaux utilisés pour ces douilles cylindriques sont généralement issus de deux familles : les organiques et les non-organiques. Lorsque les conditions de température le permettent, c'est-à-dire en dessous de 300° environ, les matériaux organiques sont généralement employés. Au delà, les matériaux non-organiques sont préférés.

Pour améliorer l'efficacité de ces douilles cylindriques, de nombreuses solutions en terme de matériau ou de revêtement ont été proposées et décrites notamment dans les documents EP 1584827, US 20050232757 et US 20060029494. Toutefois, toutes ces solutions présentent une durabilité limitée. Il est donc nécessaire de changer régulièrement ces douilles cylindriques, ce qui implique une opération contraignante de démontage de la turbomachine. Dans le domaine aéronautique, des objectifs de plus de 40000 heures de vol sans démontage de la turbomachine sont requis par les compagnies aériennes. De telles durées de vie sont techniquement difficiles à atteindre et nécessitent des aménagements complexes et coûteux.

Il est également connu des documents GB 825547, FR 1325261 et US 3471126 d'utiliser un unique palier à rotule pour guider un pivot d'aube. Cependant, l'utilisation d'un unique pivot d'aube n'optimise pas suffisamment la durée de vie et la réduction de l'usure mécanique.

La présente invention a pour objectif principal de proposer un dispositif de commande d'un pivot d'aube à angle de calage variable avec une durée de vie améliorée et permettant de réduire les charges appliquées sur les zones de contact.

Un autre objectif de l'invention est de réduire les fuites entre le pivot et l'alésage. Ces fuites réduisent le rendement global de la turbomachine et peuvent même endommager les moyens de régulation situés à l'extérieur du compresseur.

A cet effet, l'invention concerne notamment un dispositif de commande d'un pivot d'aube à angle de calage variable comportant un levier de commande et un pivot comportant une extrémité inférieure et une extrémité supérieure, ladite extrémité supérieure étant reliée au levier de commande. Selon l'invention, ce dispositif comprend deux paliers à rotule, un premier palier à rotule étant disposé à l'extrémité inférieure du pivot et un second palier à rotule étant disposé à l'extrémité supérieure du pivot.

L'invention concerne également un stator comportant un carter d'axe de révolution (Y) comprenant au moins un alésage réalisé selon un axe radial (X) orienté perpendiculairement audit axe de révolution (Y). Selon l'invention, ce stator comporte en outre :
- au moins un dispositif de commande de pivot d'aube, et
- au moins une aube orientée selon l'axe radial (X) disposée à l'intérieur du carter, ladite aube étant solidaire du pivot par l'extrémité inférieure dudit pivot,
les paliers à rotule étant disposés à l'intérieur de l'alésage.

L'invention se rapporte également à un compresseur comportant un tel stator et une turbomachine comportant ledit compresseur. Avantageusement, le dispositif proposé par l'invention permet de réduire sensiblement les charges appliquées sur les zones de contact. Il devient alors envisageable d'employer une gamme de matériaux plus importante capable de résister à l'usure.

D'autres avantages et caractéristiques de l'invention ressortiront à la lecture de description détaillée qui suit en référence aux figures annexées, fournies à titre d'exemples non limitatifs, sur lesquelles :
- la figure 1 représente un dispositif de commande d'un pivot d'aube à angle de calage variable selon l'invention ;
- la figure 2 représente un palier à rotule ;
- la figure 3 représente une coupe effectuée selon la ligne II-II de la figure 1 détaillant la liaison entre le palier à rotule et le pivot selon différentes variantes 3A, 3B, 3C, 3D et 3E ;
- la figure 4 représente un détail d'une variante du dispositif de commande d'un pivot d'aube à angle de calage variable selon l'invention ; et
- la figure 5 représente une turbomachine.

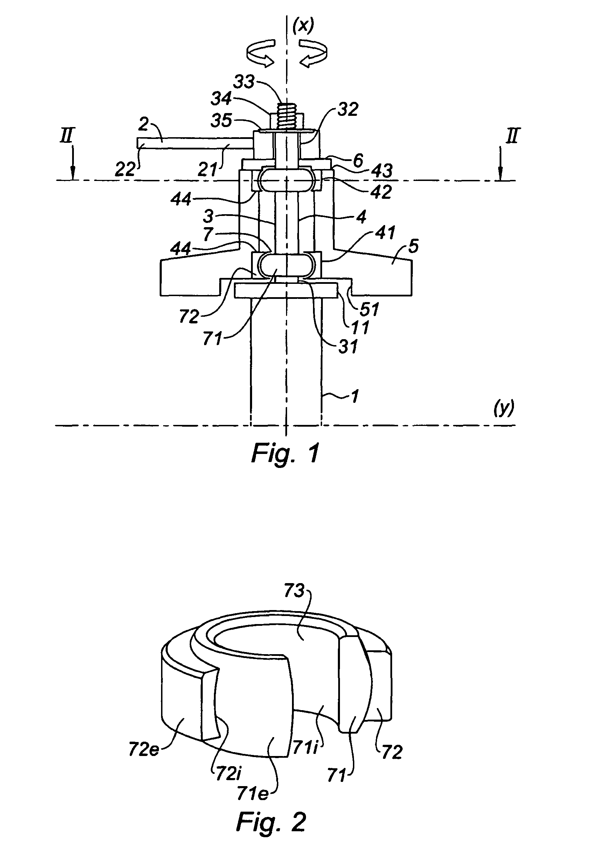

La figure 1 représente un dispositif de commande de l'angle de calage d'une aube 1 selon un axe (X) orienté radialement par rapport à l'axe de révolution (Y) d'un carter de turbomachine. Un pivot 3 est situé dans le prolongement d'une aube 1 et orienté selon le même axe (X). L'aube 1 et le pivot 3 peuvent être séparés par une platine 11, reconstituant une partie de la veine aérodynamique située à proximité, disposée dans un lamage 51 du carter 5.

Le pivot 3, comportant une extrémité inférieure 31 et une extrémité supérieure 32, est disposé dans un alésage 4, comportant une extrémité inférieure 41 et une extrémité supérieure 42, habituellement réalisé dans le carter 5. A cet effet, l'alésage 4 peut comprendre en chacune de ses extrémités 41 et 42 un lamage 44, c'est-à-dire un logement cylindrique, destiné à accueillir chaque palier à rotule 7. La fixation du palier à rotule 7 dans l'alésage 4 peut s'effectuer par frettage, soudage, brasage ou toute autre méthode équivalente. De préférence, la fixation du palier à rotule 7 s'effectue préalablement au montage des aubes 1.

Dans le domaine des turbomachines, dans le contexte d'une pièce de révolution, il est courant d'utiliser les termes « supérieure » et « inférieure » à la place, respectivement, de « extérieure » et « intérieure ».

Le pivot 3 comporte, à sa seconde extrémité 32, une tige filetée 33 destinée à coopérer avec un écrou 34 et une rondelle 35 pour le relier rigidement à une première extrémité 21 d'un levier de commande 2. Une deuxième extrémité 22 du levier de commande 2 est reliée à un anneau de commande (non représenté). Une seconde rondelle 6 peut également être disposée entre le levier de commande 2 et la seconde extrémité supérieure 42 de l'alésage 4. D'autres moyens de liaison entre le pivot 3 et le levier de commande 2 sont envisageables sans pour autant remettre en cause le principe de l'invention. La rotation du pivot 3 selon l'axe (X) permet de faire varier l'angle de calage de l'aube 1.

Conformément à l'invention, le dispositif comprend deux paliers à rotule 7, un premier palier à rotule 7 étant disposé à l'extrémité inférieure 31 du pivot 3 et un second palier à rotule 7 étant disposé à l'extrémité supérieure 32 du pivot 3.

Un palier à rotule 7 est représenté plus en détail sur la figure 2. Il comporte une bague intérieure 71, comportant une surface intérieure cylindrique 71i et une surface extérieure sphérique 71 e, et une bague extérieure 72, comportant une surface intérieure sphérique 72i et une surface extérieure cylindrique 72e. Les bagues 71 et 72 forment, grâce à leurs surfaces de contact sphériques 71 e et 72i, une liaison rotule, aussi appelée liaison sphérique, c'est-à-dire une liaison autorisant trois mouvements de rotation selon trois axes différents. Le pivot 3 traverse le palier à rotule 7 et est en contact avec la surface intérieure cylindrique 71 i de la bague intérieure 71. Le palier à rotule 7 guide le pivot 3 en rotation selon l'axe (X). Le palier à rotule 7 peut être réalisé dans un matériau organique, tel que par exemple en polyimide ; il peut aussi être réalisé dans un matériau métallique ou céramique.

Sans que cela soit indispensable, la bague intérieure 71 du palier à rotule 7 et le pivot 3 peuvent être bloqués en rotation l'un par rapport à l'autre. Ce blocage en rotation peut être obtenu de différentes manières. Une coupe effectuée selon la ligne II-II de la figure 1 représente par plusieurs exemples, 3A, 3B, 3C, 3D et 3E, la liaison entre le palier à rotule 7 et le pivot.

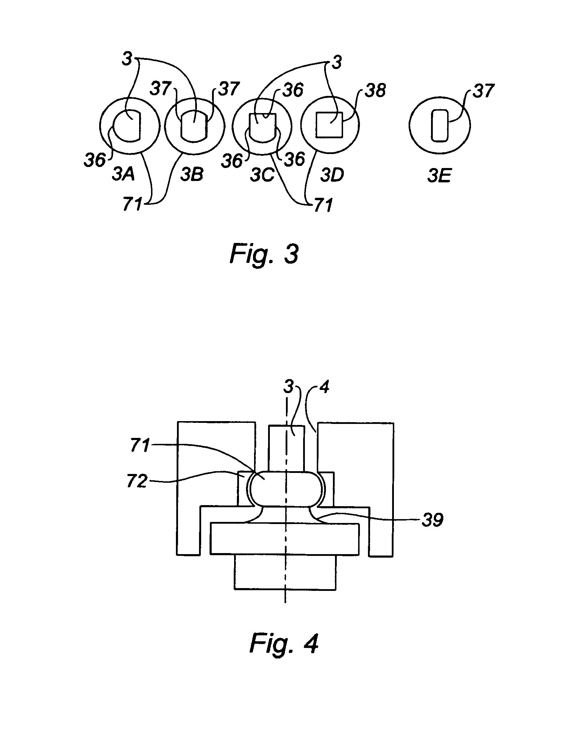

Selon des premiers exemples, illustrés sur les figures 3A, 3B et 3C, le blocage en rotation est obtenu par le fait que le pivot 3 comporte au moins un méplat 36 sur sa surface externe, la forme interne de la bague intérieure 71 étant complémentaire.

Selon des deuxièmes exemples, illustrés sur les figures 3B et 3E, le blocage en rotation est obtenu par le fait que le pivot 3 possède une forme de tenon 37 et que la forme interne de la bague intérieure 71 possède une forme de mortaise 37.

Selon un troisième exemple, illustré sur la figure 3D, le blocage en rotation est obtenu par le fait que le pivot 3 et la surface interne de la bague intérieure 71 du palier à rotule 7 possèdent des sections de forme carré complémentaires.

Pour limiter les vibrations entre le pivot 3 et la surface intérieure 71 i de la bague intérieure 71 du palier à pivot 7, un moyen d'amortissement ou adhérent 73 peut être interposé entre ces deux pièces, par exemple un film en matière plastique tel que de l'élastomère de silicone de type RTV (Room Temperature Vulcanizing), c'est-à-dire un silicone polymérisable à froid. Il permet également d'éviter les usures sur le pivot 3.

Une variante applicable à l'invention présentée ci-dessus consiste à munir le pivot 3 d'une extrémité ayant une section à diamètre croissant 39 pour positionner le pivot 3 correctement par rapport au palier à rotule 7 et au carter 5. Cette variante est illustrée sur la figure 4.

Un jeu suffisant doit être conservé entre la platine 11 de l'aube 1 et le palier à rotule 7 afin que le fonctionnement du dispositif ne soit pas bloqué par un contact entre la platine 11 et le lamage 51 de carter ou la platine 11 et la bague extérieure 72 du palier à rotule 7.

Des calculs ont montré que le remplacement d'une liaison pivot, autorisant un unique mouvement de rotation, par une liaison rotule, autorisant trois mouvements de rotation, permet de réduire les charges appliquées sur les zones de contact. Ces calculs ont été effectués en prenant en considération deux matériaux identiques en contact ayant un coefficient de Poisson de 0,3 et un module d'Young de 200000 Mpa.

Dans le cas d'une douille cylindrique disposée autour d'un pivot, correspondant à un contact cylindre intérieur / cylindre extérieur, les valeurs suivantes ont été choisies : diamètre du cylindre intérieur de 15,72 mm et diamètre du cylindre extérieur de 15,612 mm, soit un jeu de 0,108. Le contact s'effectue sur une longueur comprise entre 1 et 4 mm en fonction de l'alignement des pièces, avec un déversement de l'aube, c'est-à-dire une inclinaison de celle-ci par rapport à son axe (X) sous l'action de la force aérodynamique exercée. Dans des conditions extrêmes, par exemple lors du décollage d'un aéronef équipé d'un tel dispositif, il a été constaté par le calcul que la pression de contact varie de 84 à 167 Mpa en fonction de l'alignement de la douille cylindrique.

Dans un alésage légèrement modifié, le remplacement de la douille cylindrique par un palier à rotule, comportant une bague intérieure, dont le diamètre intérieur est de 7,94 mm et le diamètre extérieur est de 14,27 mm, et une bague extérieure dont le diamètre extérieur est de 19,05 mm, avec un jeu de 0,018 mm entre les deux bagues, il a été constaté par le calcul que, dans les mêmes conditions de fonctionnement, la pression de contact est de 40 Mpa. Par conséquent, grâce à l'invention, on obtient une pression de contact au moins 2 fois plus faible et même jusqu'à 4 fois plus faible dans les conditions les plus défavorables observées en essai.

Dans un dispositif de commande d'aube à calage variable utilisant un palier à rotule 7 selon l'invention, les fuites sont moins importantes que dans un dispositif de commande d'aube à calage variable utilisant une douille cylindrique. Ceci est expliqué par le fait que le jeu existant entre la bague intérieure 71 et la bague extérieure 72 d'un palier à rotule 7 est très faible. L'invention permet donc également de réduire les fuites entre le pivot et l'alésage. Le rendement de la turbomachine est ainsi amélioré.

Un autre objet de l'invention concerne également un stator comportant :
- un carter 5 d'axe de révolution (Y) comprenant au moins un alésage 4 réalisé selon un axe radial (X) orienté perpendiculairement audit axe (Y),
- au moins un dispositif de commande de pivot d'aube à angle de calage variable, et
- au moins une aube 1 orientée selon l'axe radial (X) disposée à l'intérieur du carter 5, ladite aube 1 étant solidaire du pivot 3 par l'extrémité inférieure 32 dudit pivot 3,
les paliers à rotule 7 étant disposés à l'intérieur de l'alésage 4.

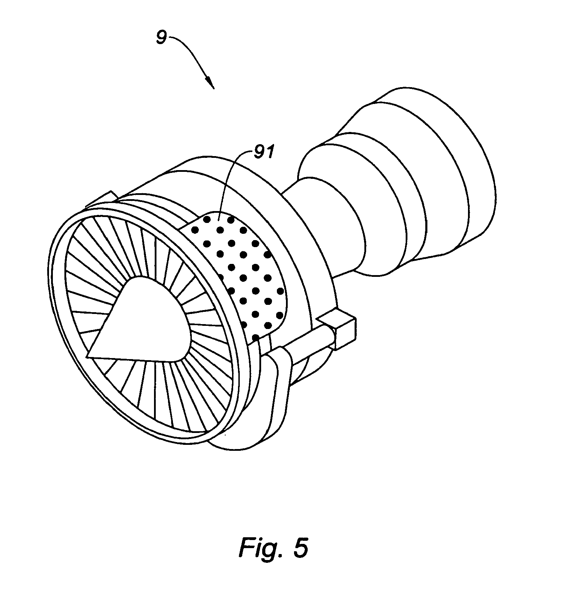

L'invention se rapporte également à un compresseur 91 comportant un tel stator ainsi qu'une turbomachine 9 comportant un tel compresseur 91, tels que représentés sur la figure 5.

## Revendications

1. Dispositif de commande d'un pivot d'aube à angle de calage variable comportant :
• un levier de commande (2), et
• un pivot (3) d'aube comportant une extrémité inférieure (31) et une extrémité supérieure (32), ladite extrémité supérieure (32) étant reliée au levier de commande (2),
ledit dispositif étant **caractérisé en ce qu'**il comprend deux paliers à rotule (7), un premier palier à rotule (7) étant disposé à l'extrémité inférieure (31) du pivot (3) et un second palier à rotule (7) étant disposé à l'extrémité supérieure (32) du pivot (3).

2. Dispositif de commande d'un pivot d'aube à angle de calage variable selon la revendication précédente **caractérisé en ce que** au moins un palier à rotule (7) comporte une bague intérieure (71) et une bague extérieure (72) formant une liaison rotule.

3. Dispositif de commande d'un pivot d'aube à angle de calage variable selon la revendication précédente **caractérisé en ce que** la bague intérieure (71) du palier à rotule (7) et le pivot (3) sont bloqués en rotation l'un par rapport à l'autre.

4. Dispositif de commande d'un pivot d'aube à angle de calage variable selon la revendication 3 **caractérisé en ce que** le pivot (3) comporte au moins un méplat (36) sur sa surface externe, la surface interne de la bague intérieure (71) comportant une forme complémentaire.

5. Dispositif de commande d'un pivot d'aube à angle de calage variable selon la revendication 3 **caractérisé en ce que** le pivot (3) possède une forme de tenon et que la forme interne de la bague intérieure (71) possède une forme de mortaise.

6. Dispositif de commande d'un pivot d'aube à angle de calage variable selon la revendication 3 **caractérisé en ce que** le pivot (3) et la bague intérieure (71) du palier à rotule (7) possèdent des sections de forme carré complémentaires.

7. Dispositif de commande d'un pivot d'aube à angle de calage variable selon l'une des revendications 3 à 6 **caractérisé en ce qu'**un film en matière plastique (73) est interposé entre le pivot (3) et une surface intérieure (71 i) de la bague intérieure (71) du palier à rotule (7).

8. Stator comportant un carter (5) d'axe de révolution (Y) comprenant au moins un alésage (4) réalisé selon un axe radial (X) orienté perpendiculairement audit axe de révolution (Y) **caractérisé en ce qu'**il comporte en outre :
• au moins un dispositif de commande selon l'une des revendications précédentes, et
• au moins une aube (1) orientée selon l'axe radial (X) disposée à l'intérieur du carter (5), ladite aube (1) étant solidaire du pivot (3) par l'extrémité inférieure (32) dudit pivot (3),
les palier à rotule (7) étant disposés à l'intérieur de l'alésage (4).

9. Stator selon la revendication 8 **caractérisé en ce que** l'alésage (4) comprend au moins un lamage (44) destiné à accueillir un palier à rotule (7).

10. Stator selon l'une des revendications 8 ou 9 **caractérisé en ce que** la fixation d'un palier à rotule (7) dans l'alésage (4) peut s'effectuer par frettage, soudage ou brasage.

11. Stator selon l'une des revendications 8 à 10 **caractérisé en ce que** l'extrémité inférieure du pivot (3) possède un diamètre croissant (39).

12. Compresseur comportant un stator selon l'une des revendications 8 à 11.

13. Turbomachine comportant un compresseur selon la revendication 12.

## Claims

1. A device for controlling a pivot of a variable-pitch blade comprising:
a control lever (2), and
a blade pivot (3) comprising a bottom end (31) and a top end (32), said top end (32) being connected to the control lever (2),
said device comprising two swivel bearings (7), a first swivel (7) bearing being placed at the bottom end (31) of the pivot (3) and a second swivel bearing (7) being placed at the top end (32) of the pivot (3).

2. The device for controlling a pivot of a variable-pitch blade as claimed in the preceding claim, wherein at least one swivel bearing (7) comprises an inner race (71) and an outer race (72) forming a swivel connection.

3. The device for controlling a pivot of a variable-pitch blade as claimed in the preceding claim, wherein the inner race (71) of the swivel bearing (7) and the pivot (3) are prevented from rotating relative to one another.

4. The device for controlling a pivot of a variable-pitch blade as claimed in claim 3, wherein the pivot (3) comprises at least one flat (36) on its outer surface, the inner surface of the inner race (71) comprising a matching shape.

5. The device for controlling a pivot of a variable-pitch blade as claimed in claim 3, wherein the pivot (3) has a tenon shape and the inner shape of the inner race (71) has a mortice shape.

6. The device for controlling a pivot of a variable-pitch blade as claimed in claim 3, wherein the pivot (3) and the inner race (71) of the swivel bearing (7) have matching square-shaped sections.

7. The device for controlling a pivot of a variable-pitch blade as claimed in one of claims 3 to 6, wherein a plastic film (73) is interposed between the pivot (3) and an inner surface (71 i) of the inner race (71) of the swivel bearing (7).

8. A stator comprising a casing (5) with an axis of revolution (Y) comprising at least one bore (4) made along a radial axis (X) oriented perpendicularly to said axis of revolution (Y), which also comprises:
at least one control device as claimed in one of the preceding claims, and
at least one blade (1) oriented along the radial axis (X) placed inside the casing (5), said blade (1) being fixedly attached to the pivot (3) via the bottom end (32) of said pivot (3),
the swivel bearings (7) being placed inside the bore (4).

9. The stator as claimed in claim 8, wherein the bore (4) comprises at least one facing (44) designed to receive a swivel bearing (7).

10. The stator as claimed in one of claims 8 or 9, wherein the attachment of a swivel bearing (7) in the bore (4) may be carried out by shrink-fitting, welding or brazing.

11. The stator as claimed in one of claims 8 to 10, wherein the bottom end of the pivot (3) has an increasing diameter (39).

12. A compressor comprising a stator as claimed in one of claims 8 to 11.

13. A turbomachine comprising a compressor as claimed in claim 12.

## Patentansprüche

1. Vorrichtung zum Steuern einer Schaufelschwenkachse mit variablem Einstellwinkel, umfassend:
• einen Steuerhebel (2), und
• eine Schaufelschwenkachse (3) umfassend ein unteres Ende (31) und ein oberes Ende (32), wobei das besagte obere Ende (32) mit dem besagten Steuerhebel (2) verbunden ist,
wobei die besagte Vorrichtung **dadurch gekennzeichnet ist, dass** es zwei kugelförminge Gleitlager (7) umfasst, wobei ein erstes kugelförmiges Gleitlager (7) am unteren Ende (31) der Schwenkachse (3) und ein zweites kugelförmiges Gleitlager (7) am oberen Ende (32) der Schwenkachse (3) angeordnet sind.

2. Vorrichtung zum Steuern einer Schaufelschwenkachse mit variablem Einstellwinkel nach dem vorherigen Anspruch, **dadurch gekennzeichnet, dass** zumindest ein kugelförmiges Gleitlager (7) einen Innenring (71) und einen Außenring (72) umfasst, die ein Kugelgelenk bilden.

3. Vorrichtung zum Steuern einer Schaufelschwenkachse mit variablem Einstellwinkel nach dem vorherigen Anspruch, **dadurch gekennzeichnet, dass** der Innenring (71) des kugelförmigen Gleitlagers (7) und die Schwenkachse (3) zueinander verdrehgesichert sind.

4. Vorrichtung zum Steuern einer Schaufelschwenkachse mit variablem Einstellwinkel nach Anspruch 3, **dadurch gekennzeichnet, dass** die Schwenkachse (3) an ihrer Außenfläche zumindest eine Abflachung (36) umfasst, wobei die Innenfläche des Innenringes (71) eine dazu ergänzende Form aufweist.

5. Vorrichtung zum Steuern einer Schaufelschwenkachse mit variablem Einstellwinkel nach Anspruch 3, **dadurch gekennzeichnet, dass** die Schwenkachse (3) eine Passfederform besitzt, und dass die innere Form des Innenringes (71) eine Nutform besitzt.

6. Vorrichtung zum Steuern einer Schaufelschwenkachse mit variablem Einstellwinkel nach Anspruch 3, **dadurch gekennzeichnet, dass** die Schwenkachse (3) und der Innenring (71) des kugelförmigen Gleitlagers (7) ergänzende Querschnitte in Quadratform besitzen.

7. Vorrichtung zum Steuern einer Schaufelschwenkachse mit variablem Einstellwinkel nach den Ansprüchen 3 bis 6, **dadurch gekennzeichnet, dass** eine Folie aus Kunststoffmaterial (73) zwischen die Schwenkachse (3) und eine innere Fläche (71 i) des Innenringes (71) des kugelförmigen Gleitlagers (7) eingearbeitet ist.

8. Stator umfassend ein Gehäuse (5) einer Drehachse (Y) umfassend zumindest eine Bohrung (4), die entsprechend einer Radialachse (X) ausgeführt ist, die senkrecht zur besagten Drehachse (Y) verläuft, **dadurch gekennzeichnet, dass** er darüber hinaus folgendes umfasst:
• zumindest eine Steuervorrichtung nach einem der vorherigen Ansprüche, und
• zumindest eine Schaufel (1), die entsprechend einer Radialachse (X) ausgerichtet und im Inneren des Gehäuses (5) angeordnet ist, wobei die besagte Schaufel (1) über das untere Ende (32) der besagten Schwenkachse (3) fest mit der Schwenkachse (3) verbunden ist,
wobei die kugelförmigen Gleitlager (7) im Inneren der Bohrung (4) angeordnet sind.

9. Stator nach Anspruch 8, **dadurch gekennzeichnet, dass** die Bohrung (4) zumindest eine Mulde (44) umfasst, die dazu bestimmt ist, ein kugelformiges Gleitlager (7) aufzunehmen.

10. Stator nach einem der Ansprüche 8 oder 9, **dadurch gekennzeichnet, dass** die Befestigung eines kugelformigen Gleitlagers (7) in der Bohrung (4) durch Schrumpfen, Schweißen oder Löten erfolgen kann.

11. Stator nach einem der Ansprüche 8 bis 10, **dadurch gekennzeichnet, dass** das untere Ende der Schwenkachse (3) einen ansteigenden Durchmesser (39) besitzt.

12. Kompressor umfassend einen Stator nach einem der Ansprüche 8 bis 11.

13. Turbinentriebwerk umfassend einen Kompressor nach Anspruch 12.
